# EUROPEAN PATENT SPECIFICATION

(11) **EP 3 044 173 B1**
(45) Date of publication and mention of the grant of the patent: **15.11.2017**
(21) Application number: 14843906.0
(22) Date of filing: 11.09.2014
(51) Int. Cl.: C02F 9/08, C02F 1/30, C02F 1/38, C02F 1/78

(54) **AN INSTALLATION ARRANGEMENT FOR PURIFICATION OF CONTAMINATED WATER FROM PHARMACEUTICALS**
INSTALLATIONSANORDNUNG ZUR REINIGUNG VON MIT ARZNEIMITTELN KONTAMINIERTEM WASSER
AGENCEMENT D'INSTALLATION POUR LA PURIFICATION DE L'EAU CONTAMINÉE PAR DES PRODUITS PHARMACEUTIQUES

(30) Priority: 11.09.2013 SE 1351049
(43) Date of publication of application: 20.07.2016
(73) Proprietor: NUTSOS, Mikael, 146 53 Tullinge (SE)
(72) Inventor: NUTSOS, Mikael, 146 53 Tullinge (SE)
(74) Representative: Brann AB
(86) International application number: PCT/SE2014/051050
(87) International publication number: WO 2015/038055

(56) References cited:
- WO-A1-00/61505
- CN-A- 102 701 495
- GB-A- 2 350 357
- JP-A- 2003 062 583
- JP-A- 2003 145 184
- US-A1- 2009 078 632

## Description

### TECHNICAL FIELD

The present invention relates to an installation arrangement for purification of contaminated water, comprising an oxidation and/or dissociation arrangement arranged to treat contaminated water or waste water for purifying the water from pharmaceuticals.

### PRIOR ART

Waste water treatment plants for treatment of community or municipal waste water are well known in the art. Such waste water treatment plants normally comprises a large sludge basin, in which gravity acts to sediment solids in the waste water, followed by one or more aerobic or anaerobic degradation steps in which bacteria or microbes digest nutrients in the water. Many other forms of waste water treatment steps are also known, such as filtering and addition of chemicals for binding contaminants, flocculation, etc. One problem that recently has been brought to attention is the spreading of drugs and pharmaceuticals in waste water. Pharmaceuticals are often chemically similar to hormones causing dangerous side effects in biological life, they may be toxic, and/or they may induce chemical resistance in harmful bacteria or microbes. Pharmaceuticals are normally not efficiently removed by the standard treatment steps offered by municipal waste water treatment plants, and in fact pharmaceuticals may harm the microbes used in the biological degradation steps. One problem when designing an efficient method for removal of pharmaceuticals from contaminated water is that the pharmaceuticals constitute a large group of different chemical compounds with different characteristics and different chemical properties, so that any removal processes designed to remove pharmaceuticals in general cannot target specific compounds. This leads to considerable variation in efficiency between different pharmaceuticals depending on the selected purification process.

It is known to use ozone-treatment for degradation of drugs and pharmaceuticals in waste water coming from hospitals. Waste water from hospitals comprises high concentrations of pharmaceuticals relative to the concentration in municipal water, and therefore it is advantageous to purify hospital water locally. The ozone is highly reactive and acts to oxidize many of the functional groups found in hydrocarbons. Ozone may therefore change the chemical structure of organic based pharmaceuticals, and in particular, some forms of hydrocarbons may be split into fragments. However, depending on the particular chemical compound and composition of the pharmaceuticals, the efficiency of the ozone treatment may vary considerably.

Within the processing and manufacturing industries it is also known to treat waste water locally due to the advantages of having a higher concentration of the contaminants, having better knowledge of the expected nature and mixture of the contaminants, and in many cases also a smaller number of different contaminants. A large number of apparatuses and methods for purification, separation and/or degradation of contaminants are known, such as centrifuges, decanters, filters, scrubbers etc.

The document CN102701495 describes a typical installation known from the prior art.

### SUMMARY OF THE INVENTION

One objective of the present invention is to indicate a more efficient method for purification of waste water to remove drugs and/or pharmaceuticals. This objective is achieved with the installation arrangement according to claim 1.

According to one aspect of the invention an installation arrangement for purification of contaminated water to remove drugs and/or pharmaceuticals comprises an oxidation and/or dissociation arrangement comprising an arrangement selected from the group consisting of an ozone treatment arrangement, an electro-Fenton arrangement and a radiolysis arrangement, or any combination thereof, which installation arrangement is additionally provided with at least one separation arrangement for separating solids from the contaminated water arranged upstream of the oxidation and/or dissociation arrangement, wherein the solids separation arrangement comprises at least one high-performance separation device arranged to generate a centrifugal force >1.5 G acting on solid particles in the contaminated water in a direction of separating the solid particles from the contaminated water.

With the invention it has been realized that by incorporating a high-performance separation step, which acts by applying a centrifugal force >1.5 G separating solid particles from the contaminated water prior to the oxidation and/or dissociation step, the efficiency of the oxidation and/or dissociation treatment is improved. This is surprising since the pharmaceuticals are mostly thought to be in solution and should therefore be unaffected by any previous separation steps. Similarly, the oxidation and/or dissociation degradation mechanisms are purely chemical in nature, so that naively the amount of solids suspended should not affect the degradation process. The mechanism for the improvement is not clear, but it is believed that the absence of small, solid, suspended particles leads to that the compounds constituting the pharmaceuticals have lower probability of being adsorbed, leaving the compounds more open for nucleofilic attack. Another mechanism could be that if being adsorbed on the surface of a solid particle, any alkene or alkyne bonds could be stabilized. With the invention it has thus been realized that removal of small solid particles from the contaminated water prior to the ozone treatment gives higher efficiency in the oxidation and/or dissociation step.

Preferably, the oxidation and/or dissociation arrangement comprises an ozone treatment arrangement arranged to treat the contaminated water with ozone, wherein the ozone oxidizes organic and/or metallic substances contained in the contaminated water. Ozone is very aggressive and has the capacity to either dissociate complex molecules or to oxidize the molecules. Depending on the chemical structure of the pharmaceuticals they may therefore be degraded into smaller, and more easily biodegradable, parts. Alternatively, ozone has the capacity to oxidize and potentially form ions of pharmaceuticals that are not degraded. Thus, ozone functions in a very general way to chemically alter or degrade large classes of organic or inorganic compounds. In one preferred embodiment the oxidation and/or dissociation arrangement comprises only the ozone treatment arrangement to accomplish the oxidation/dissociation, and no additional arrangements.

In one embodiment the oxidation and/or dissociation arrangement comprises an electro-Fenton arrangement. Electro-Fenton utilises iron ions Fe²⁺ or Fe³⁺ in combination with hydrogen peroxide H₂O₂, leading to an ionisation of organic compounds. One example of an electro-Fenton method is described in Krzysztof Barbusinski "Fenton Reaction - Controversy Concerning the Chemistry"; Ecological Chemistry and Engineering Vol. 16, No. 3. The electro-Fenton arrangement may be used instead of an ozone treatment arrangement. Preferably, however, if an electro-Fenton arrangement is included, then the oxidation and/or dissociation arrangement also comprises an ozone treatment arrangement. If combined with electro Fenton, the supplied ozone may then be used to generate the H₂O₂ for the electro Fenton reaction.

In one embodiment the oxidation and/or dissociation arrangement comprises a radiolysis arrangement. The radiolysis arrangement then comprises a nuclear active material generating radiation, such as α-radiation, which energizes and dissociates molecular bonds in molecules. Hence, use of the radiolysis arrangement may lead to a splitting of complex pharmaceuticals into smaller parts, and may also ionize molecules or split molecules into radicals. Radiolysis is also described in Sophie Le Caër "Water Radiolysis: Influence of Oxide Surfaces on H2 Production under Ionizing Radiation"; Water 2011, 3, 235-253; doi: 10.3390/w3010235. The radiolysis arrangement may also be combined with the ozone treatment arrangement.

In a preferred embodiment the purification installation comprises an ion separation arrangement comprising an arrangement selected from the group consisting of an ion exchange device, a filter device containing Polonite® as filter material, an electro-coriolysis arrangement, and an electro-coagulation arrangement and/or any combination thereof, and which ion separation arrangement is arranged downstream of the oxidation and/or dissociation arrangement for removal of organic or metal ions from the contaminated water. With the invention it has also been realized that including an ion separation arrangement after the oxidation and/or dissociation treatment step has a great impact on the purification levels achieved. Those pharmaceutical compounds which are not chemically changed by the oxidation and/or dissociation may still become negatively or positively charged by virtue of the oxidation. Thus the oxidation and/or dissociation arrangement ionises and/or charges the medicaments, so that they are easily removed in the subsequent ion separation step.

Preferably, the ion separation arrangement comprises an ion exchange device. According to a preferred embodiment the ion separation arrangement comprises an ion exchange device arranged downstream of an ozone treatment arrangement for removal of organic or metal ions from the contaminated water. Preferably, the purification installation comprises an ion exchange device arranged downstream the ozone treatment for removal of organic salts. Ozone treatment has the advantage that even if a pharmaceutical compound does not react with ozone so as to dissociate the compound, many functional groups in pharmaceuticals are at least oxidized into carboxylic acid groups by the ozone, which may or may not change its biological function, but which at least adds a negative charge onto the compound. By including an ion separation arrangement downstream of the ozone treatment an even larger number of different pharmaceuticals may be thus removed with the method. Preferably the ion exchange device is a vertical ion exchanger. Such ion exchange devices are well suited for continuous processing on an industrial scale.

According to one embodiment the ion separation arrangement comprises a filter device comprising Polonite® as filter material. Polonite®, which is currently sold by Bioptech AB, is a natural mineral comprising Calcium (Ca) and Silica (Si), with some potassium (K). The mineral has the ability to absorb phosphorous and other ionic contaminants.

According to one embodiment the ion separation arrangement comprises an electrocoriolysis arrangement. An electrocoriolysis arrangement comprises letting the water in contact with electrically charged electrodes and creating a centrifugal movement of the water. Close to the electrodes there is a first layer of ions attracted to the electrodes, and a second layer of oppositely charged ions attracted to the first layer. The motion of the water caused by the centrifugal force acts to disrupt the second layer, so that it is slid off the electrode surfaces in the direction of the force, leading to an efficient removal of ions. The electrocoriolysis arrangement is also described in US 5,858,199 and US 6,277,265, both to Hanak. According to one embodiment the ion separation arrangement comprises a n electro-coagulation arrangement. Electro-coagulation is a method marketed by Quantum Ionics Inc., which comprises letting water flow through a stack of parallel metal plates held at a voltage potential. The metal in the plates is dissolved in the water and the dissolved metal ions act as nucleation seeds for other ions in the contaminated water to crystallize on, or otherwise become attracted to by static electric force or solvation. This leads to an effective removal of ions from the water.

According to one embodiment the purification installation further comprises a UV-radiation source arranged for irradiating the contaminated water. In one embodiment the UV-radiation source is arranged in association with the ozone treatment arrangement for irradiation of the contaminated water during the ozone treatment. In another embodiment the UV-radiation source is arranged downstream the ozone treatment arrangement in the purification installation. In yet another embodiment the UV-radiation source is arranged for irradiating the contaminated water both in association with the ozone treatment and downstream of the ozone treatment. Including UV-radiation with the purification contributes to a higher efficiency, and also to the ability to kill bacteria and microbes.

According to one embodiment the separation arrangement comprises a solids collection device arranged to collect and form the separated solids into dry, combustible bodies. By combusting the combustible bodies any combustible contaminants gathered in the bodies is consumed and rendered harmless to the environment. In particular, this is the case if the arrangement is used in connection with for example a building in which it is known that non-combustible contaminants are not handled.

According to one embodiment the high-performance separation device is adapted to generate a centrifugal force higher than 100 G ≈ 980 m/s² (with 1 G ≈ 9,80665 m/s² at latitude 45 deg). Preferably the high-performance separation device is adapted to generate a centrifugal force higher than or equal to 1000 G ≈ 9800 m/s². According to yet another embodiment the high-performance separation device is adapted to generate a centrifugal force higher than or equal to 2000 G ≈ 19600 m/s². According to yet another embodiment the high-performance separation device is adapted to generate a centrifugal force higher than or equal to 5000 G ≈ 49033 m/s². The higher centrifugal force applied the smaller solid particles are possible to separate out from a body of liquid. With the invention is has been realized that it is not sufficient to only apply standard gravity of 1 G to separate out the particles, as for example in a sludge basin, since many small particles may then float about in the contaminated water indefinitely.

According to one embodiment the separation device is arranged to generate said force by rotating the contaminated water, thus generating a centrifugal force onto the solid particles. Preferably the separation device comprises a mechanical member arranged in contact with the water, which mechanical member is rotatable and thus transfers a rotational force or movement to the contaminated water. According to one embodiment the rotating mechanical member is a bowl containing the contaminated water, or a flow of the contaminated water. According to one embodiment the high-performance separation device is arranged to generate said separating centrifugal force by rotating a mechanical member designed to be able to rotate with a speed higher than or equal 2000 Rpm. A device with this level of performance is able to separate most solids of low particle size from the contaminated water, and to affect the efficiency of the ozone treatment to a sufficient degree. Also it is not too costly to manufacture such a device.

According to one embodiment the rotating mechanical member is shaped as a screw. Preferably the separation device then comprises a rotatable bowl having a rotatable screw shaped mechanical member inside the bowl. This allows for continuous separation and removal of solid particles from a continuous stream of contaminated water simultaneous with the centrifugal treatment. A continuous process is in general less costly than a batch process. According to one preferred embodiment the high-performance separation device is a centrifugal decanter or a centrifugal tricanter.

According to one embodiment the separation device is designed to be able to rotate with a speed higher than or equal to 1500 Rpm. Preferably, the mechanical member of the separation device is designed to rotate with a speed lower than or equal to 13 000 Rpm. Thus the separation device is able to remove very small particles from the contaminated water. According to a preferred embodiment the high-performance separation device is a disk stack centrifuge. Disk stack centrifuges are known to be able to separate out very small solid particles from a liquid, in some cases particles with diameters down to about 0.5 microns in size. A disk stack centrifuge normally comprises a plurality of spaced apart disks arranged at an angle to the centrifugal force applied onto the liquid. The solid particles are forced against the surfaces of the discs due to the centrifugal force, and when the solids make contact with the surface the solids are separated from being in suspension in the liquid. By having a plurality of discs the surface area increases, which allows for better separation efficiency. Depending on design and on the liquid processed a disk stack may have the ability to generate centrifugal forces up to 6 000 G. According to the invention the separation arrangement comprises at least three separation devices arranged to process the contaminated water one after the other. The three separation devices are arranged in sequence relative to the flow direction of the contaminated water and comprise a centrifugal decanter and a centrifugal tricanter followed by a disk stack centrifuge. Thus larger, and more plentiful solid particles are first separated and removed with the decanter and the tricanter, followed by the disk stack with the ability to separate out extremely small diameter particles from the contaminated water.

According to one embodiment the installation arrangement is adapted to be installed in a building or a building complex, such as a hospital, for purification of contaminated waste water originating from the activities performed within the building or building complex. The installation arrangement is then preferably arranged upstream of any connection with a municipal waste water system. Preferably, the arrangement is designed to handle a daily volume of between 10 and 100 cubic meters of contaminated water. The installation can be adapted to be installed in a building or a building complex for purification of contaminated waste water originating from the activities performed within the building or building complex. Preferably, the building or building complex is a hospital. In another embodiment the building or building complex may be a residential building. The installation arrangement comprises an oxidation and/or dissociation arrangement arranged to oxidize and/or dissociate molecular bonds of the pharmaceuticals in the contaminated water, and is characterized in that the installation further comprises at least one separation arrangement for separating solids from the contaminated water arranged upstream of the oxidation and/or dissociation arrangement, wherein the solids separation arrangement comprises at least one high-performance separation device arranged to generate a centrifugal force acting on solid particles in the contaminated water in a direction of separating the solid particles from the contaminated water. Preferably, the installation arrangement comprises an ozone treatment arrangement arranged to treat the contaminated water with ozone, wherein the ozone oxidizes organic and/or metallic substances solved in the contaminated water. Thus the invention provides for efficient removal of drugs and/or pharmaceuticals from waste water from hospitals. According to statistical calculations and measurements hospitals generates about 15 % of the pharmaceuticals entering municipal water treatment plants, and thus a large part of the pharmaceuticals may be reduced.

### BRIEF DESCRIPTION OF THE ATTACHED DRAWINGS

The invention is now to be described as a number of non-limiting examples with reference to the attached drawings.
- Fig. 1a-e: shows a first example of an installation arrangement.

- Fig. 2: shows another example of an installation arrangement.

- Fig. 3: shows an installation arrangement used in association with a building or building complex.

### DETAILED DESCRIPTION

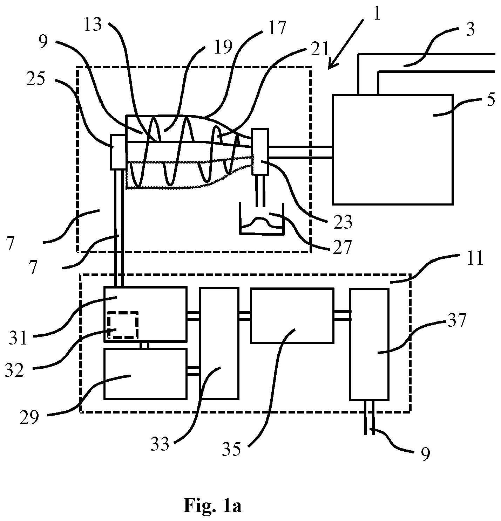

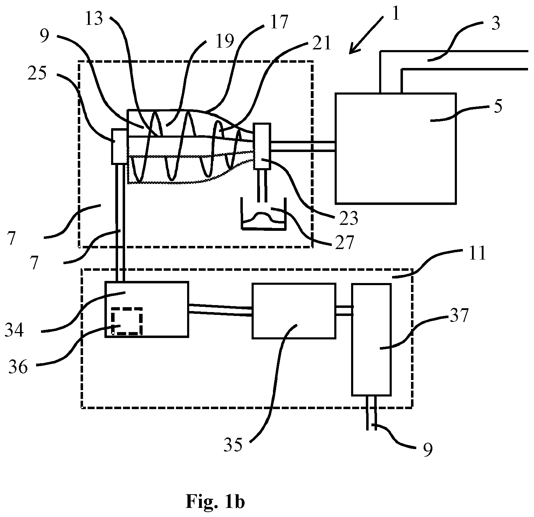

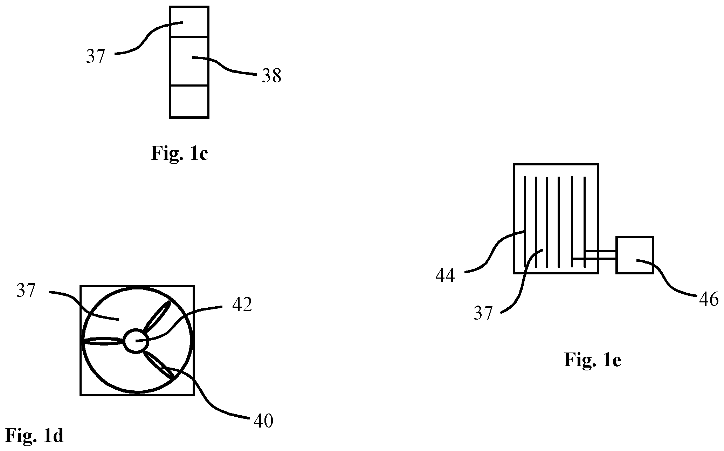

In fig. 1 an installation arrangement 1 for waste water treatment according to a first example is shown. The installation arrangement comprises an inlet pipe 3 for waste water leading to a sludge tank 5. The sludge tank is arranged for intermediate storage and reception of the waste water, and primarily acts as a buffer to even out variations in inflow. Depending on the type of sludge tank used and on the quality of the waste water a first sedimentation due to gravity may or may not take place. Even though the inlet pipe 3 and the sludge tank 5 in this example are included as components of the installation arrangement they may in another example instead be provided by the system to which the installation arrangement is to be connected. The installation arrangement 11 may also be designed to generate a flow of the contaminated water through the installation, by gravity and/or by comprising one or more pumps arranged to drive the flow.

The installation arrangement 1 comprises a separation arrangement 7 for separating solids from the contaminated water. The separation arrangement is here depicted by a dotted line to indicate that the separation arrangement is a system comprised of a number of components. In this example the separation arrangement 7 comprises a high-performance separation device 9 arranged to generate a centrifugal force acting on solid particles in the contaminated water in a direction of separating the solid particles from the contaminated water. In this example the high-performance separation device 9 is arranged to generate a centrifugal force higher than 1 G, in this example higher than or equal to 500 G, to ensure sufficient ability to remove small solid particles in the contaminated water.

The installation arrangement 1 further comprises an oxidation and/or dissociation arrangement 11 for treatment of the waste water so as to oxidize and/or dissociate molecular bonds of the pharmaceuticals in the contaminated water. The oxidation and/or dissociation arrangement 11 is likewise depicted by a dotted line to indicate that the oxidation and/or dissociation treatment arrangement is a system comprised of a number of components. In this example the oxidation and/or dissociation arrangement is an ozone treatment arrangement 11, which generates ozone and subjects the contaminated waste water to the ozone, wherein organic and/or metallic compounds in the waste water are oxidized. Since many pharmaceuticals are organic in nature pharmaceuticals solved in the waste water are prone to be degraded by the ozone, so that the contaminated waste water is purified. It has been realized that by including a separation arrangement 7 comprising at least one high-performance separation device 9 upstream of an ozone treatment arrangement 11 the efficiency of the installation arrangement in terms of removal of pharmaceuticals from the contaminated water is improved. With the term removal is intended degradation of pharmaceuticals, chemical change of pharmaceuticals into new, less harmful compounds, separation of pharmaceuticals from the contaminated water, and/or combinations thereof.

In this example the high-performance separation device 9 comprises a mechanical member 13 designed to rotate and to act on the contaminated water so as to rotate the water. The rotation of the water creates a centrifugal force and due to differences in density a separation will be produced.

In this example the high-performance separation device 9 is a centrifugal decanter 15. A centrifugal decanter may sometimes also be known under the names scroll centrifuge or solid bowl centrifuge. The centrifugal decanter 15 comprises a cylindrical, horizontally positioned bowl 17 provided with an internal space 19, and a rotating member 21, also known as a conveyor, and shaped as a screw arranged in said space. In operation contaminated water is continuously fed via an inlet 23 of the bowl 17 and further into the inner space 19 of the bowl. The contaminated water is then continuously fed into the internal space 19, and follows the winding passage of the screw shaped rotating member 21 until reaching an outlet 25.

While the contaminated water is fed through the inner space 19 both the bowl 17 and the rotating member 21 are rotated at high speeds. The speed of the rotating member 21 is preferably higher than 200 rpm, preferably higher than 300 rpm, and preferably lower than 5000 rpm, preferably lower than 4000 rpm. The speed of the bowl is preferably lower than the speed of the rotating member with less than 100 rpm, preferably with less than 50 rpm, and preferably with at least 2 rpm. The bowl 17 and the rotating member 21 then accelerates the contaminated water and rotates the contaminated waste water and suspended solids, thus generating a centrifugal force acting on both the water and on any solid particles in the water. In this example the high-performance separation device is adapted to generate a centrifugal force higher than or equal to 1000 G in order to ensure an efficient separation of small solid particles from the contaminated water.

Due to differences in density the liquid and any suspended particles in the liquid will then separate when the centrifugal force is applied. The solids will then collect along the outer rim of the bowl 17 inside the inner space 19. Due to the screw shape the rotational member 21 will not only cause a rotation of the contaminated waste water and suspended solids, but will also act with a linear force onto the body of water and solids. The screw shaped rotating member 21 then moves the collected solids towards an outlet end of the decanter. Preferably, the outlet end is tapered, so that a dry beach where solids, but almost no liquid, is collected. The dried solid then exits the decanter. Hence the solids will be transported towards one end of the decanter affected by the screw movement, while the liquid will flow towards the other end, where the contaminated water is discharged via the outlet 25. Thus the screw shape allows for a continuous processing of the contaminated water. The outlet 25 from the high-performance separation device then conducts the contaminated water further to the ozone treatment arrangement 11.

The separation arrangement further comprises a solids collection device 27 arranged to collect the solids from the high-performance separation device 9, and to form the separated solids into dry, combustible bodies. The combustible bodies may then be combusted in a combustion plant, which may include smoke purification arrangement to ensure that it is free from environmental issues.

The decanter as described here is a cylindrical-conical decanter having a bowl 17 shaped as a cylinder with a tapered end section. Alternatively, the decanter may have a conical design, in which the entire bowl is tapered, or a cylindrical design, in which the bowl has no taper. In another example the high-performance separation device 9 is a centrifugal tricanter rather than a decanter. A tricanter comprises three outlets, two for liquids and one for dry contents, rather than only two outlets as a decanter. This is advantageous if for example the contaminated water also comprises a second liquid, for example oil-remains or the like.

In this example the oxidation and/or dissociation arrangement comprises an ozone treatment arrangement 11. The ozone treatment arrangement 11 comprises an ozone generation device 29 arranged to generate ozone. The ozone generation device 29 is in this example generating ozone by UV-irradiation of oxygen, but in another example ozone is generated by electrical discharges in a rich oxygen atmosphere. Of course other methods for generating ozone are also applicable. The ozone treatment arrangement 11 comprises an ozone injection device 31 arranged to inject the generated ozone into the contaminated water stream. In this example the ozone is injected into the contaminated water stream in the form of bubbles. The ozone then reacts with and oxidizes organic functional groups and/or metals solved in the contaminated water. The ozone treatment arrangement further comprises an ozone removal device 33, which may either act by separating the ozone from the contaminated water or by degrading the ozone. The oxidation of pharmaceuticals from the ozone treatment may lead to a defragmentation of organic compounds, for example if reacting with an alkene or alkyne functional group, it may lead to an acidification, for example if reacting with an aldehyde or ketone functional group, and/or it may lead to a substitution reaction, for example if reacting with a halide or another good leaving functional group. These mechanisms tend to degrade or change the pharmaceuticals into less harmful, more easily removable, and/or biologically inactive substances.

In an alternative embodiment, the oxidation and/or dissociation arrangement may also comprise an electro-Fenton arrangement 32 in combination with the ozone treatment arrangement. In this example the electro-Fenton arrangement comprises an iron source 32 for supplying iron ions to the contaminated water. The electro-Fenton arrangement may also comprise a H₂O₂ source, or alternatively, the O₃ source of the ozone treatment device may act as the H₂O₂ source when O₃ reacts with water. The electro-Fenton reaction then takes place and oxidizes pharmaceuticals in the contaminated water. In yet another alternative embodiment shown in fig. 1b, the oxidation and/or dissociation arrangement 11 may instead comprise a radiolysis arrangement 34. The radiolysis arrangement then comprises a radiation source 36, such as a nuclear active material providing α-rays. The high energy of the α-rays then acts to dissociate molecular bonds of the pharmaceuticals in the contaminated water.

The ozone treatment arrangement further comprises a UV-radiation source 35 arranged for irradiating the contaminated water. In this example the UV-source is arranged downstream of the ozone removal device 33. The UV-irradiation may act both in terms of further degrading or reacting pharmaceuticals in the contaminated water, and it also kills off germs or microbes possibly present in the contaminated waste water.

The installation arrangement 1 further comprises an ion separation arrangement arranged downstream of the ozone removal device 33 for removal of organic or metal ions from the contaminated water. In this example the ion separation arrangement is an ion exchange device 37. Since some ozone reaction mechanisms produce ions as a result the addition of an ion exchanger 37 after the ozone treatment step results in that those pharmaceuticals are effectively removed from the contaminated water. Otherwise it could happen that a pharmaceutical is only changed into an acid, which could still be harmful and/or biologically active. The ion exchanger 37 is therefore in this example loaded with a material designed for removal of organic acids. In this example the ion exchange device is a vertical ion exchanger, which allows a homogenous flow through the ion exchanger, and without need to apply a driving force. The installation arrangement may also comprise further ion exchangers, for example for removal of nitrates, metal oxides, metal salts, or other compounds, depending on the waste water quality and characteristics.

In another alternative embodiment shown in fig. 1c, the ion separation arrangement 37 may comprise a filter device 38 comprising a filter material designed for filtering out ions. Preferably the filter material is Polonite®. In another alternative shown in fig. 1d, the ion separation arrangement 37 may comprise an electro-coriolysis arrangement. The arrangement then comprises two or more electrodes 40 designed to make contact with the contaminated water, and a rotating member 42 designed to generate a centrifugal force acting on the water. The electro-coriolysis arrangement is further configured so that the flow of water flushes against the sides of the electrodes so as to wash off a layer of ions formed thereon. In yet another alternative shown in fig. 1e, the ion separation arrangement 37 comprises an electro-coagulation arrangement. The arrangement comprises a stack of metal plates 44 designed to make contact with the contaminated water, and a voltage source 46 for supplying a voltage potential to the stack of plates. The metal in the metal plates is further selected so as to dissolve slowly and supply metal ions to the water in order to act as nucleation sites.

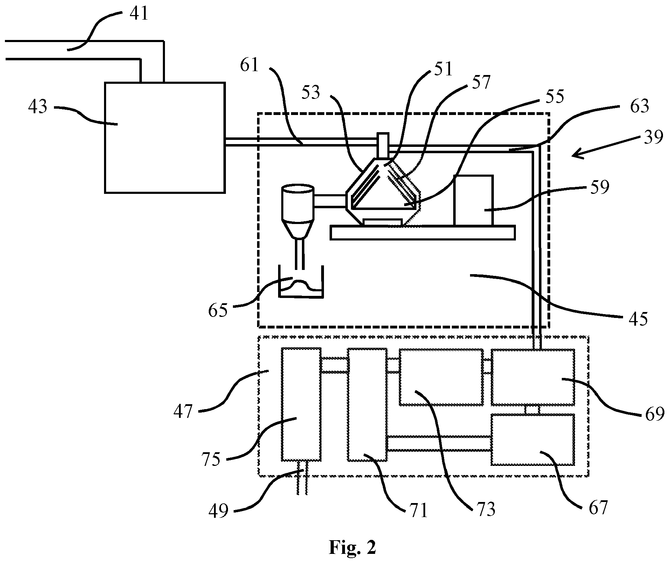

In fig. 2 yet another example of an installation arrangement 39 is shown. For components of the installation arrangement in fig. 2, which are similar to the components of the installation arrangement in fig. 1, the reader is referred to the corresponding sections of fig. 1 for details. Briefly, as for the installation arrangement in fig. 1, the installation arrangement of fig. 2 comprises an inlet pipe 41, a sludge tank 43, a separation arrangement 45, an ozone treatment arrangement 47, and an outlet pipe 49, the components being arranged in that order.

The separation arrangement 45 of fig. 2 comprises a high-performance separation device 51, which is of a different kind than the separation device 9 shown in fig. 1. However, the high-performance separation 51 device still have many features in common with the separation device 9 described in fig 1, and in particular the high-performance separation device 51 is arranged to generate a centrifugal force acting on any solid particles in the contaminated water in a direction of separating the solid particles from the contaminated water. Furthermore, the high-performance separation device is adapted to generate a centrifugal force higher than or equal to 5000 G.

In this example the high-performance separation device 51 is a disk stack. A disk stack may also be known under the name conical plate centrifuge. A disk stack 51 comprises a bowl 53, an inner space 55 inside the bowl, and a plurality of obliquely positioned and spaced apart disks 57 inside the inner space. The disk stack further comprises an engine or motor 59 arranged to rotate the rotor 55 with a speed higher than or equal to 1500 Rpm. In this example, the mechanical member 55 of the separation device is designed to be able to rotate with a speed higher than or equal to 3000 Rpm, preferably about 10 000 rpm.

The incoming contaminated water is introduced via an inlet 61 at the top, is pushed towards the bottom of the bowl 53 and is rotated to very high speeds. Due to differences in density the solids suspended in the liquid are pushed towards the surface area of the obliquely positioned disks. Once the particles make contact with the surface of the discs the particles are no longer in suspension, and are therefore considered as separated out from the water. Due to that there are many disks, the surface area is large so that the separation capacity is increased. The separated solids then migrate towards and are collected at the outer rim of the bowl 83. The clarified liquid on the other hand moves into the centre of the disk stack 51 and is pushed towards a discharge outlet 63 also arranged in the top of the bowl. The solids collected at the outer rim of the bowl are then removed. The removal may be continuous, may be intermittent whereby a piston (not shown) intermittently allows discharge of the gathered solids, or it may take place between runs when the bowl is not rotating.

In this example the disk stack 51 is arranged to generate a centrifugal force acting on the solid particles suspended in the liquid which is higher than or equal to 3000 G. In this example the disk stack is arranged to generate a centrifugal force which is higher than or equal to 4000 G. In this example the disk stack 51 is designed to be able to generate a centrifugal force which is up to 6000 G during operation. Disk stacks are known to have very high separation abilities. Preferably the disk stack has the ability to separate out particles with sizes of about 0,5 µm to about 10 µm, which ability is dependent on the weight of the particles.

The separation arrangement further comprises a solids collection device 65 arranged to collect any solid particles discharged from the disk stack, and to form the separated solid particles into dry, combustible bodies.

The ozone treatment arrangement 47 comprises, as per the ozone treatment arrangement of fig. 1, an ozone generation device 67 arranged to generate ozone, an ozone injection device 69 arranged to inject the generated ozone into the contaminated water stream, an ozone removal device 71, a UV-radiation source 73 arranged for irradiating the contaminated water, and an ion exchanger 75. One main difference of the present ozone treatment arrangement 47 relative to the ozone treatment arrangement 11 of fig. 1, is that the UV-radiation source 73 in this example is arranged in combination with the ozone treatment. The UV-radiation source 73 is thus located in between the ozone injection device 69 and the ozone removal device 71, wherein the contaminated water is acted upon simultaneously by both ozone and UV-radiation. This may in some cases lead to a better degradation, since UV-light may initialize some degradation mechanisms in which ozone partakes.

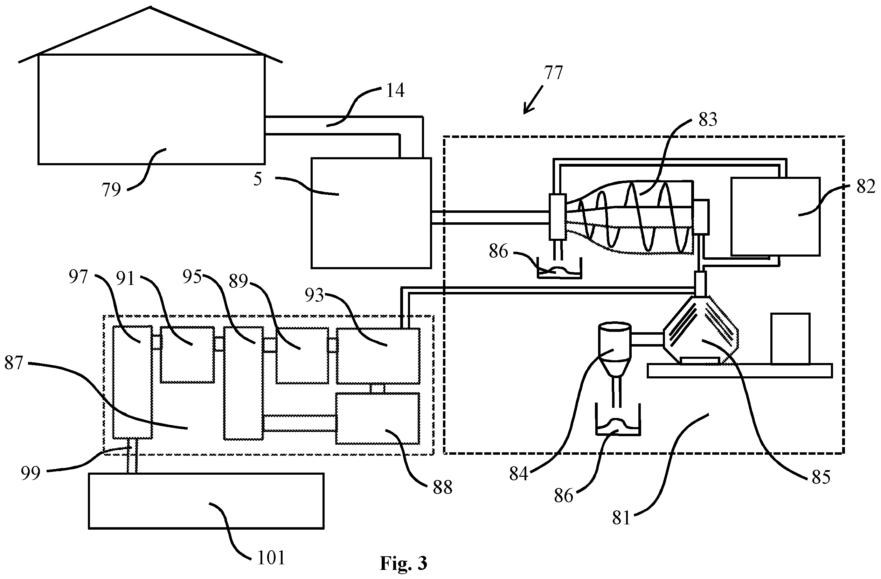

In fig. 3 yet another example of an installation arrangement 77 is shown. As before, for like components the reader is referred to the descriptions in relation to figs 1 and 2 for details. The installation arrangement 77 is in this example shown installed in association with a building or a building complex, such as a hospital, for purification of contaminated waste water originating from the activities performed within the building or building complex 79. In a preferred embodiment the installation arrangement is housed inside the building or building complex.

In this example the separation arrangement 81 comprises at least two separation devices 83, 85 arranged to process the contaminated water one after the other. In this example the separation arrangement comprises a first separation device 83 in the form of a decanter, and a second separation device 85 downstream of the first separation device 83 in the form of a disk stack. Thus the decanter 83 first completes a rough separation after which the disk stack 85 effects a very high-efficiency separation in which very small suspended particles are removed. This gives the advantage of both a higher separation efficiency, but also that the solids content is separated into two different fractions with different particle size distributions. The installation arrangement 77 further comprises a cyclone 84 and solid collection devices 86 for collection of the separated solids.

The separation arrangement 81 also comprises an intermediary storage tank 82. The intermediary storage tank 82 is connected to the liquid outlet from the first separation device 83, and may receive the contaminated water therefrom for intermediate storage. In a first mode of operation the intermediary storage tank 82 may act as a buffer between the first separation device 83 and the second separation device 85. An outlet from the intermediary storage tank 82 is in this example also connected to inlet to the first separation device 83. In a second mode of operation the intermediary storage tank may then act as a return feed to the first separation device, so as to allow all or some of the contaminated water to be processed two or more times by the first separation device 83 (the decanter). Similarly, the intermediary storage tank 82 may, in a third mode of operation, act as a return feed for the second separation device 85, so as to allow all or some of the contaminated water to be processed two or more times by the second separation device 85 (the disk stack). This gives the possibility to allow the separation devices to run at different speeds, so as to first separate larger particles in a first processing step, and then finer particles in a second processing step, performing both steps with the same device.

In this example the oxidation and dissociation arrangement comprises an ozone treatment arrangement 87 comprising an ozone generating device 88, an ozone injection device 93 and an ozone removal device 95 further comprises two separate UV-irradiation sources 89, 91. A first UV-radiation source 89 is positioned in between the ozone injection device 93 and the ozone removal device 95 as shown in fig. 2, wherein the UV-radiation may initiate ozone degradation mechanisms, and the second UV-radiation source 91 is positioned downstream of the ozone removal device 95, also as shown in fig. 2, wherein the UV-radiation may act to ionize non-affected compounds in the water and to remove any remnants of ozone. This is in turn followed by an ion exchanger 97 as described previously. The outlet pipe 99 in turn leads to a municipal waste water system 101, in this example illustrated by a culvert leading to a municipal waste water treatment plant. Even though the installation arrangement should be capable of purifying the waste water sufficiently for letting the waste water out into the environment immediately, it may in some instances be beneficial to connect the waste water outlet pipe 99 to a municipal waste water system 101 anyway, for example due to legislation or due to ease of transportation of the purified waste water to a suitable discharge location.

## Claims

1. A cleaning installation for purification of contaminated water to remove drugs and/or pharmaceuticals therefrom, the cleaning installation comprising
an oxidation and/or dissociation arrangement comprising
an arrangement selected from the group consisting of
an ozone treatment arrangement,
an electro-Fenton arrangement and
a radiolysis arrangement, or any combination thereof,
wherein the cleaning installation (1, 39, 77) further comprises
at least one separation arrangement (7, 45, 81) for separating solids from the water contaminated with drugs and/or pharmaceuticals arranged upstream of the oxidation and/or dissociation arrangement,
**characterized in that**
the separation arrangement (7, 45, 81) comprises centrifugal decanter (83) and a centrifugal tricanter (83) followed by a disk stack centrifuge (85).

2. A cleaning installation according to claim 1, **characterized in that** the cleaning installation (1, 39, 77) further comprises an ion separation arrangement comprising an arrangement selected from the group consisting of an ion exchange device, a filter device containing Polonite® as filter material, an electro-coriolysis arrangement, and an electro-coagulation arrangement and/or any combination thereof, said ion separation arrangement being arranged downstream of the oxidation and/or dissociation arrangement for removal of organic or metal ions from the water contaminated with drugs and/or pharmaceuticals.

3. A cleaning installation according to claim 1 or 2, **characterized in that** the cleaning installation (1, 39, 77) comprises a UV-radiation source (35, 73, 89, 91) arranged for irradiating the water contaminated with drugs and/or pharmaceuticals.

4. A cleaning installation according to any of the claims 1-3, **characterized in that** the separation arrangement (7, 45, 81) comprises a solids collection device (27, 65) arranged to collect and form the separated solids into dry, combustible bodies.

5. A cleaning installation according to any of the claims 1-4, **characterized in that** one of the separation arrangements (51, 83, 85) is adapted to generate a centrifugal force higher than or equal to 1000 G.

6. A cleaning installation according to claim 5, **characterized in that** one of the separation arrangements (51, 83, 85) is arranged to generate said separating centrifugal force by rotating a mechanical member (13), wherein the rotating mechanical member (13) is shaped as a screw.

7. A cleaning installation according to claim 2, **characterized in that** the ion separation arrangement comprises an ion exchange device (37, 75, 97).

8. A building or a building complex (79), such as a hospital, comprising a cleaning installation (1, 39, 77) according to one or more of the claims 1-7.

## Patentansprüche

1. Säuberungsanlage zur Reinigung von kontaminiertem Wasser zur Entfernung von Arzneistoffen und/oder Pharmazeutika daraus, wobei die Säuberungsanlage umfasst
eine Oxidations- und/oder Dissoziationseinrichtung, umfassend
eine Einrichtung, ausgewählt aus der Gruppe, bestehend aus einer Ozonbehandlungseinrichtung, einer Elektro-Fentoneinrichtung und einer Radiolyseeinrichtung oder einer beliebigen Kombination davon,
wobei die Säuberungsanlage (1, 39, 77) weiter umfasst
mindestens eine Trenneinrichtung (7, 45, 81) zum Trennen von Feststoffen aus dem mit Arzneistoffen und/oder Pharmazeutika kontaminierten Wasser, die stromaufwärts von der Oxidations- und/oder Dissoziationseinrichtung eingerichtet ist, **dadurch gekennzeichnet, dass**
die Trenneinrichtung (7, 45, 81) Zentrifugaldekanter (83) und einen Zentrifugaltrikanter (83), gefolgt von einer Tellerzentrifuge (85), umfasst.

2. Säuberungsanlage nach Anspruch 1, **dadurch gekennzeichnet, dass** die Säuberungsanlage (1, 39, 77) weiter eine Ionentrenneinrichtung umfasst, umfassend eine Einrichtung, ausgewählt aus der Gruppe, bestehend aus einer Ionenaustauschvorrichtung, einer Filtervorrichtung, die Polonite® als Filtermaterial enthält, einer Elektro-Coriolyseeinrichtung und einer Elektro-Koagulationseinrichtung und/oder beliebiger Kombination davon, wobei die Ionentrenneinrichtung stromabwärts von der Oxidations- und/oder Dissoziationseinrichtung zur Entfernung von organischen oder Metallionen von dem mit Arzneistoffen und/oder Pharmazeutika kontaminierten Wasser eingerichtet ist.

3. Säuberungsanlage nach Anspruch 1 oder 2, **dadurch gekennzeichnet, dass** die Säuberungsanlage (1, 39, 77) eine zur Bestrahlung des mit Arzneistoffen und/oder Pharmazeutika kontaminierten Wassers eingerichtete UV-Strahlungsquelle (35, 73, 89, 91) umfasst.

4. Säuberungsanlage nach einem der Ansprüche 1 bis 3, **dadurch gekennzeichnet, dass** die Trenneinrichtung (7, 45, 81) eine Feststoffsammelvorrichtung (27, 65) eingerichtet zum Sammeln und Formen der getrennten Feststoffe zu trockenen, brennbaren Körpern, umfasst.

5. Säuberungsanlage nach einem der Ansprüche 1 bis 4, **dadurch gekennzeichnet, dass** eine der Trenneinrichtungen (51, 83, 85) angepasst ist, um eine Zentrifugalkraft höher als oder gleich 1000 G zu erzeugen.

6. Säuberungsanlage nach Anspruch 5, **dadurch gekennzeichnet, dass** eine der Trenneinrichtungen (51, 83, 85) eingerichtet ist, um die trennende Zentrifugalkraft durch Rotieren eines mechanischen Bauteils (13) zu erzeugen, wobei das rotierende mechanische Bauteil (13) wie eine Schraube geformt ist.

7. Säuberungsanlage nach Anspruch 2, **dadurch gekennzeichnet, dass** die Ionentrenneinrichtung eine Ionenaustauschvorrichtung (37, 75, 97) umfasst.

8. Gebäude oder ein Gebäudekomplex (79), wie ein Krankenhaus, umfassend eine Säuberungsanlage (1, 39, 77) nach einem oder mehreren der Ansprüche 1 bis 7.

## Revendications

1. Installation de nettoyage pour la purification d'eau contaminée pour y éliminer les médicaments et/ou produits pharmaceutiques, l'installation de nettoyage comprenant
un dispositif d'oxydation et/ou de dissociation comprenant
un dispositif choisi dans le groupe consistant en
un dispositif de traitement à l'ozone,
un dispositif électro-Fenton et
un dispositif de radiolyse, ou une combinaison de ceux-ci,
dans laquelle l'installation de nettoyage (1, 39, 77) comprend en outre
au moins un dispositif de séparation (7, 45, 81) pour séparer les solides de l'eau
contaminée par les médicaments et/ou produits pharmaceutiques disposée en
amont de l'dispositif d'oxydation et/ou de dissociation,
**caractérisée en ce que**
le dispositif de séparation (7, 45, 81) comprend un décanteur centrifuge (83) et
un décanteur centrifuge trois phases (83) suivi d'une centrifugeuse à assiettes (85).

2. Installation de nettoyage selon la revendication 1, **caractérisée en ce que** l'installation de nettoyage (1, 39, 77) comprend en outre un dispositif de séparation d'ions comprenant un dispositif choisi dans le groupe consistant en un dispositif d'échange d'ions, un dispositif de filtrage contenant du Polonite® en tant que matériau filtrant , un dispositif d'électro-coriolyse et un dispositif d'électro-coagulation et/ou toute combinaison de ceux-ci, ledit dispositif de séparation d'ions est disposé en aval de l'dispositif d'oxydation et/ou de dissociation pour éliminer les ions organiques ou métalliques de l'eau contaminée par les médicaments et les produits pharmaceutiques.

3. Installation de nettoyage selon la revendication 1 ou 2, **caractérisée en ce que** le dispositif de nettoyage (1, 39, 77) comprend une source de rayonnement UV (35, 73, 89, 91) agencée pour irradier l'eau contaminée par les médicaments et les produits pharmaceutiques.

4. Installation de nettoyage selon l'une quelconque des revendications 1 à 3, **caractérisée en ce que** le dispositif de séparation (7, 45, 81) comprend un dispositif de collecte de solides (27, 65) agencé pour collecter et former les solides séparés en corps secs et combustibles.

5. Installation de nettoyage selon l'une quelconque des revendications 1 à 4, **caractérisée en ce que** le dispositif de séparation (51, 83, 85) est adapté pour générer une force centrifuge supérieure ou égale à 1000 G.

6. Installation de nettoyage selon la revendication 5, **caractérisée en ce qu'**un dispositif de séparation (51, 83, 85) est agencé pour générer ladite force centrifuge de séparation en tournant un élément mécanique (13), dans laquelle l'élément mécanique rotatif (13) est en forme de vis.

7. Installation de nettoyage selon la revendication 2, **caractérisée en ce que** le dispositif de séparation d'ions comprend un dispositif d'échange d'ions (37, 75, 97).

8. Bâtiment ou un complexe de bâtiments (79), tel qu'un hôpital, comprenant une installation de nettoyage (1, 39, 77) selon l'une quelconque des revendications 1 à 7.
